# EUROPEAN PATENT SPECIFICATION

(11) **EP 3 892 905 B1**
(45) Date of publication and mention of the grant of the patent: **04.01.2023**
(21) Application number: 21177146.4
(22) Date of filing: 09.11.2018
(51) Int. Cl.: F16L 21/04, F16L 21/08, B23H 9/14, B23H 1/02

(54) **COUPLING DEVICE**
KOPPLUNGSVORRICHTUNG
DISPOSITIF DE COUPLAGE

(30) Priority: 16.11.2017 NL 2019920
(43) Date of publication of application: 13.10.2021
(62) Divisional of application: 18205289.4
(73) Proprietor: Georg Fischer WAGA N.V., 8161 PA Epe (NL)
(72) Inventor: Hulsebos, Michel Paul, 7451 MN Holten (NL); van der Molen, Arjen Cornelis, 8181 PN Heerde (NL)
(74) Representative: Fenner, Seraina

(56) References cited:
- EP-A1- 0 974 780
- EP-A1- 1 138 999
- WO-A1-2009/157766
- WO-A1-2015/177259
- DE-A1- 2 646 939
- NL-A- 2 013 426

## Description

The invention relates to a coupling device for a pipe, comprising a sleeve for receiving the pipe and at least one sealing member to provide a seal between the sleeve and the pipe, and a pressure member for applying a pressure to the sleeve and to the pipe.

A relatively recent example of such a coupling device is disclosed in the international patent application WO2015/177259 assigned to the present applicant. Other examples are WO2007/055576, WO2010/114366, WO2009157766, DE 26 46 939 A1, NL 2 013 426 A, EP 1 138 999 A1, WO2015/177259 and WO2014/090667, all in the name of the applicant.

The applicant is a leading firm in this field which is exemplified by the closest prior art for the instant invention which is embodied in the 1998 invention of EP 0 974 780, which discloses a coupling device for a pipe according to the preamble, wherein a grip element is provided with dents pressed out of the plane of the grip element adjacent to slit like openings that are punched out of the grip element. The instant invention also relates to a method for fabricating a grip element to be used in such a coupling device, and relates to said grip element.

With the previous century technology of EP 0 974 780 it was found that improved tensile strain resistance was possible with a diversity of pipes, to note hard pipes like pipes of cast iron, steel, and stainless steel. At the same time the prior art coupling device was suitably used with more softer pipes as well, such as pipes of PVC, polyethylene and asbestos cement.

Over time practice showed however that although the results of applying the device of EP 0 974 780 were quite satisfactory, problems could occur when the coupling device was used on hard pipes that were provided with a covering layer, such as cast iron pipes provided with a protective epoxy layer or a zinc layer. With such pipes the tensile strain resistance could be less than desirable.

Another tensile strain resistance problem with the coupling device of the prior art could occur when the coupling device was applied with softer pipes. The dents of the device according to EP 0 974 780 could bite in such softer type of pipes in a way that the grip element of the coupling device would act as a cheese slicer on the surface of the pipe, due to which process the coupling device would gradually lose grip on the pipe. The applicant has earlier tried a solution for this problem as disclosed in EP 1 138 999, but there is still room for improvement.

The instant invention aims to provide a solution or at least alleviate one or more of the above-mentioned problems, and to this end a coupling device, is proposed according to the features of one or more of the appended claims.

In a first aspect of the invention a coupling device according to the preamble is proposed which comprises a grip element extending along at least a part of the perimeter of the pipe, wherein the grip element is provided with dents pressed out of the plane of the grip element adjacent to slit like openings punched out of the grip element.The device comprises multiple grip elements (4). Each grip element is supported by at least one pressure member, which pressure member is provided with protrusions that mate with the back of the dents that are pressed out of the plane of the corresponding grip element that is mounted on such pressure member.
This brings about the advantage to modify the crystal structure of the metal that is used for the grip element, including the structure of the dents that are pressed out of the plane of the grip element. The dents will accordingly be harder which improves their effectiveness. Alternatively it is possible to reduce costs by applying cheaper base material from which the grip element is manufactured, without sacrificing the hardness of the dents. Another advantage is that with cheaper base material the coupling device of the invention endures for a longer time without maintenance or replacement.

A suitable and preferable way to subject the edges of the slit like openings to the peening operation is to execute this operation prior to pressing the dents out of the plane of the grip element. This can be done with an appropriate peening tool.

A feature that contributes to improving the effectiveness of the dents is that a frontal surface of a top of each dent is at an angle of approximately 90° with reference to the plane of the grip element.

The invention is also embodied in a method for fabricating the grip element to be used in a coupling device according to the invention, wherein slit like openings are punched in a plate, and wherein in a forming process dents are pressed out of the plane of the plate adjacent to the openings.

According to the invention prior to pressing the dents out of the plane of the plate, edges of the slit like openings are first subjected to a peening operation.

Correspondingly the invention is also embodied in a grip element provided with dents pressed out of the plane of the grip element adjacent to slit like openings punched out of the grip element, wherein the slit like openings are subjected to a peening treatment. In an advantageous embodiment peening of the edges of the slit like openings is executed prior to pressing the dents out of the plane of the grip element.

The protrusions mating with the back of the dents that are pressed out of the plane of the grip element is an effective means to counteract the earlier mentioned cheese slicer effect when the coupling device is used on softer pipes. This counteracting effect is particularly promoted in an embodiment wherein the protrusions of the pressure member block openings in the grip element that are present next to the dents. The construction of the protrusions that mate with the back of the dents also provides that forces acting on the grip element elements due to strains exerted by the pipe on the coupling device, will effectively be transferred to the pressure members and absorbed by the construction of the coupling device.

The invention will hereinafter be further elucidated with reference to the drawing of an exemplary embodiment of a coupling device, a grip element and a method of manufacturing a grip element according to the invention that is not limiting as to the appended claims.

In the drawing:
- figure 1 shows a cross-sectional side view of the coupling device according to the invention;
- figures 2A and 2B show respectively and schematically two process steps according to the prior art for manufacturing a dent in a grip element, and figure 2C shows a cross-sectional side view of a part of a grip element near the dent manufactured according to the prior art;
- figures 3A, 3B, and 3C show respectively and schematically three process steps according to the invention for manufacturing a dent in a grip element, and figure 3D shows a cross-sectional side view of a part of a grip element near the dent manufactured according to the invention;
- figures 4A and 4B show in cross-sectional side view and exploded view, respectively a grip element together with a pressure member of the coupling device of the invention.

Whenever in the figures the same reference numerals are applied, these numerals refer to the same parts.

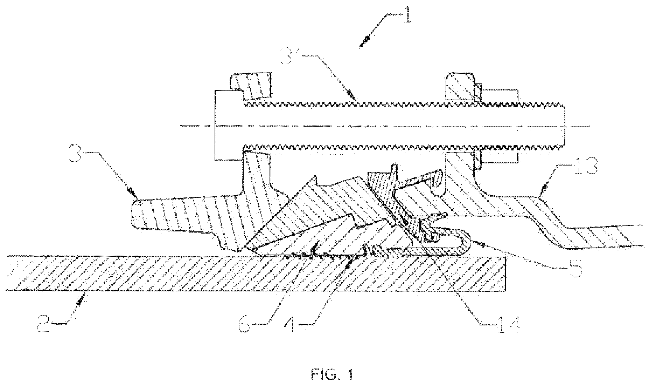

Figure 1 shows a coupling device 1 of the invention in a cross-sectional side view. The coupling device 1 comprises a sleeve 13 for receiving a pipe 2 and at least one sealing member 5 to provide a seal between the sleeve 13 and the pipe 2. The sealing member 5 may be attached to the sleeve 13 with a clip 14. Further the coupling device 1 comprises a pressure member 6 for applying a pressure to the sleeve 13 and to the pipe 2. Actuation means 3, 3' are provided to arrange that a pressure is applied to the pressure member 6, wherein a grip element 4 which extends along at least a part of the perimeter of the pipe 2 is supported by the pressure member 6. In this manner the grip element 4 is arranged to press on the pipe 2. As will be elucidated further hereinafter the grip element 4 is formed with dents pressed out of the plane of the grip element.

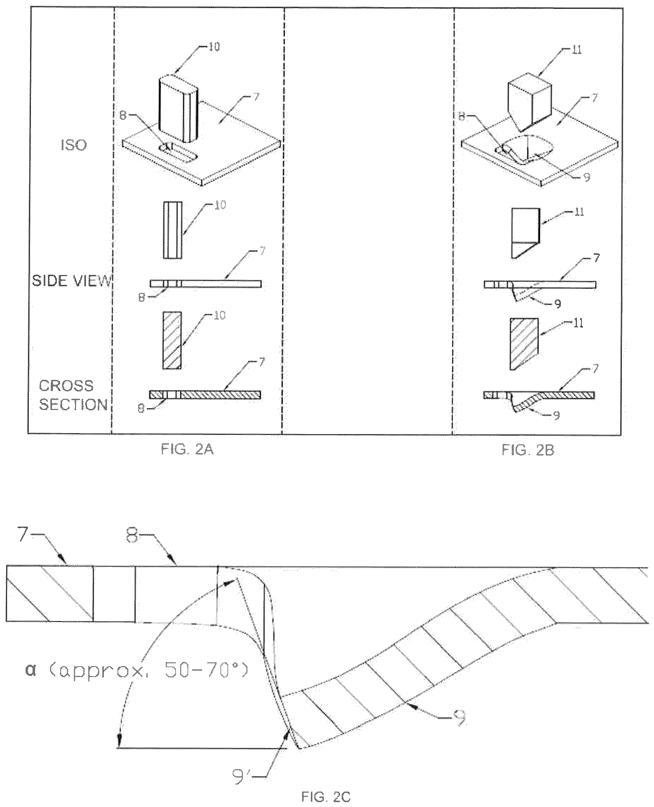

In figures 2A and 2B a prior art method is elucidated for fabricating a grip element to be used in a coupling device as shown in figure 1. In this method a punching tool 10 is used to provide slit like openings 8 in a plate 7. This is shown in figure 2A from top to bottom in an isometric view, in a side view, and in a cross-sectional view. Similarly figure 2B shows that in a subsequent step a pressing tool 11 is used to press dents 9 out of the plane of the plate 7 adjacent to the openings 8.

Figure 2C shows on larger scale one of the resulting dents 9 which is pressed out of the plane of the plate 7. In this prior art process a frontal surface 9' of the top of the dent 9 is at an angle of between 50° and 70° with reference to the plane of the plate 7 that eventually forms the grip element.

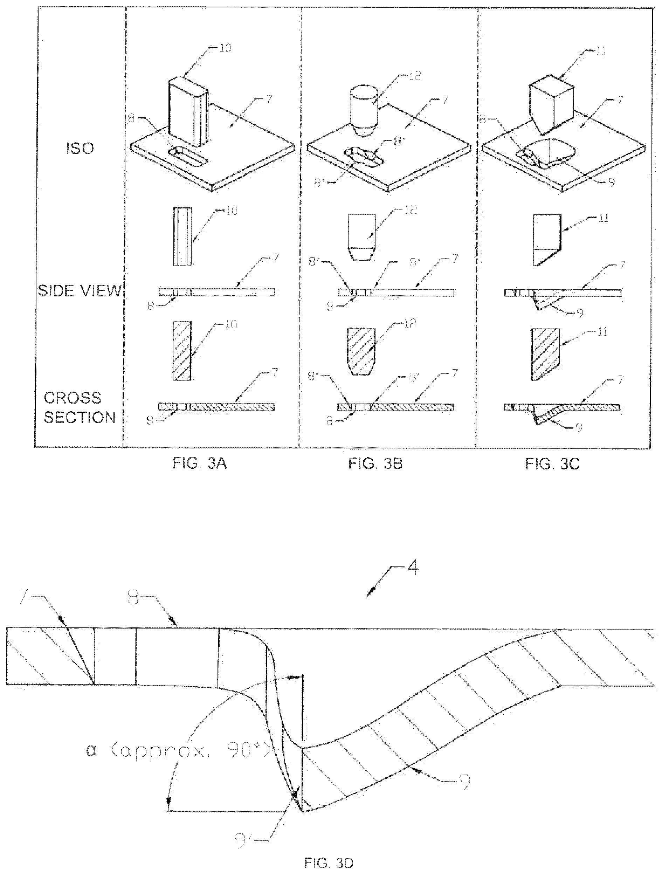

Correspondingly figures 3A - 3C show the method of the invention for fabricating a grip element 4 to be used in a coupling device as shown in figure 1.

In the method of the invention first a punching tool 10 is used to provide slit like openings 8 in a plate 7 as shown in figure 3A from top to bottom in an isometric view, in a side view, and in a cross-sectional view. Similarly figure 2B shows that in a subsequent step edges 8' of the slit like openings 8 are subjected to an operation with a peening tool 12. Figure 2C shows that thereafter in a further process when the peening of the edges 8' of the slit like openings 8 is complete, a pressing tool 11 is used to press dents 9 out of the plane of the plate 7 adjacent to the openings 8 to form the eventual grip element 4.

Figure 2D provides a detailed view on one of the resulting dents 9 which is pressed out of the plane of the plate 7. A frontal surface 9' of the top of the dent 9 is at an angle of approximately 90° with reference to the plane of the plate 7 of the grip element 4.

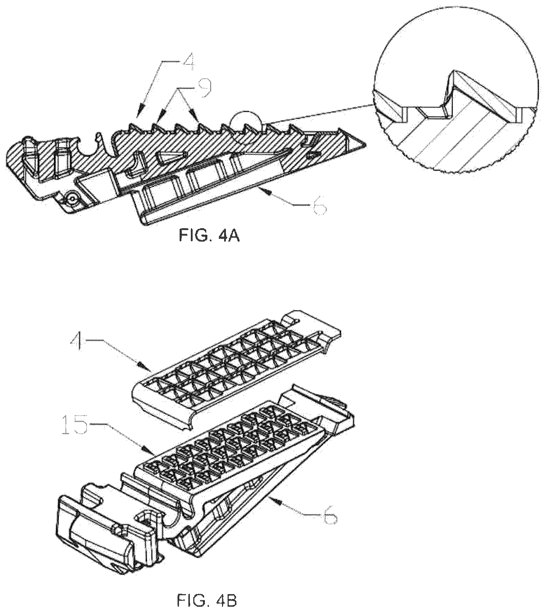

Turning now to figure 4A and figure 4B another aspect of the invention is elucidated. Figure 4B shows separately in an isometric view a grip element 4 manufactured from a plate 7 as elucidated with reference to figures 3A - 3D, and a single pressure member 6. A multitude of such pressure members 6 together form a ring around the perimeter of the pipe 2 in the coupling device 1 which is referred to in figure 1. In figure 4A a single pressure member 6 is shown in a cross-sectional view, wherein a single grip element 4 is mounted on the pressure member 6. It is however also possible that the pressure member 6 supports a number of grip elements, or that a number of pressure members support a single grip element.

In the complete coupling device as shown in figure 1 preferably each single pressure member 6 supports a single grip element 4. Accordingly the pressure members 6 together support all grip elements 4 that collectively surround the pipe 2 shown in figure 1. In the mounted condition the grip elements 4 thus extend along the entire perimeter of the pipe 2 which is connected to the coupling device 1.

It is clearly shown in both figure 4A and figure 4B that the shown pressure member 6 is provided with multiple protrusions 15 at the side facing the grip element 4. These protrusions 15 are designed to mate with the back of the dents 9 that are pressed out of the plane of the grip element 4, preferably in a manner that when the grip element 4 is mounted on the pressure member 6 as shown in figure 4A, the protrusions 15 of the pressure member 6 block openings 8 in the grip element 4 that are present next to the dents 9. This construction also provides that forces acting on the grip element 4 due to strains exerted by the pipe 2 on the coupling device 1, will effectively be transferred to the pressure member 6 and absorbed by the construction of the coupling device.

## Claims

1. Coupling device (1) for a pipe (2), comprising a sleeve (13) for receiving the pipe (2) and at least one sealing member (5) to provide a seal between the sleeve (13) and the pipe (2), a pressure member (6) for applying a pressure to the sleeve (13) and to the pipe (2), and a grip element (4) extending along at least a part of the perimeter of the pipe (2), wherein the grip element (4) is provided with dents (9) pressed out of the plane of the grip element (4) adjacent to slit like openings (8) punched out of the grip element (4), wherein the device comprises multiple grip elements (4), each grip element (4) being supported by at least one pressure member (6), **characterized in that** the pressure member (6) is provided with protrusions (15) that mate with the back of the dents (9) that are pressed out of the plane of the grip element (4).

2. Coupling device according to claim 1, **characterized in that** the protrusions (15) of the pressure member (6) block openings (8) in the grip element (4) that are present next to the dents (9).

## Patentansprüche

1. Kopplungsvorrichtung (1) für ein Rohr (2), umfassend eine Hülse (13) zur Aufnahme des Rohrs (2) und mindestens ein Abdichtglied (5) zur Bereitstellung einer Abdichtung zwischen der Hülse (13) und dem Rohr (2), ein Druckglied (6) zur Beaufschlagung der Hülse (13) und des Rohrs (2) mit einem Druck und ein Greifelement (4), das sich entlang mindestens eines Teils des Umfangs des Rohrs (2) erstreckt, wobei das Greifelement (4) mit Zähnen (9) versehen ist, die aus der Ebene des Greifelements (4) herausgedrückt und schlitzartigen Öffnungen (8) benachbart sind, die aus dem Greifelement (4) herausgestanzt sind, wobei die Vorrichtung mehrere Greifelemente (4) umfasst, wobei jedes Greifelement (4) durch mindestens ein Druckglied (6) gestützt wird, **dadurch gekennzeichnet, dass** das Druckglied (6) mit Vorsprüngen (15) versehen ist, die mit der Rückseite der Zähne (9) koppeln, die aus der Ebene des Greifelements (4) herausgedrückt sind.

2. Kopplungsvorrichtung nach Anspruch 1, **dadurch gekennzeichnet, dass** die Vorsprünge (15) des Druckglieds (6) Öffnungen (8) in dem Greifelement (4), die neben den Zähnen (9) vorliegen, blockieren.

## Revendications

1. Dispositif d'accouplement (1) pour un tuyau (2), comprenant un manchon (13) destiné à recevoir le tuyau (2) et au moins un élément d'étanchéité (5) pour assurer une étanchéité entre le manchon (13) et le tuyau (2), un élément de pression (6) destiné à appliquer une pression sur le manchon (13) et le tuyau (2), et un élément d'agrippement (4) s'étendant le long d'au moins une partie du périmètre du tuyau (2), l'élément d'agrippement (4) étant pourvu de dents (9) formées par pression de telle manière qu'elle sortent du plan de l'élément d'agrippement (4), en position adjacente à des ouvertures semblables à des fentes (8) formées par poinçonnage dans l'élément d'agrippement (4), le dispositif comprenant de multiples éléments d'agrippement (4), chaque élément d'agrippement (4) étant supporté par au moins un élément de pression (6), **caractérisé en ce que** l'élément de pression (6) est pourvu de proéminences (15) qui entrent en prise avec l'arrière des dents (9) formées par pression de telle manière qu'elle sortent du plan de l'élément d'agrippement (4).

2. Dispositif d'accouplement selon la revendication 1, **caractérisé en ce que** les proéminences (15) de l'élément de pression (6) obstruent des ouvertures (8) dans l'élément d'agrippement (4) qui se trouvent à côté des dents (9).
